Europäisches Patentamt

European Patent Office

Office européen des brevets

(19)

(11) Veröffentlichungsnummer: **0 091 896**
**A1**

## (12) EUROPÄISCHE PATENTANMELDUNG

(21) Anmeldenummer: 83890048.8

(22) Anmeldetag: 28.03.83

(51) Int. Cl.³: **C 02 F 1/48**

(30) Priorität: 05.04.82 AT 1332/82

(43) Veröffentlichungstag der Anmeldung:
19.10.83 Patentblatt 83/42

(84) Benannte Vertragsstaaten:
BE CH DE FR GB IT LI NL SE

(71) Anmelder: Eibl, Franz
Wiesenweg 48
A-6094 Axams(AT)

(72) Erfinder: Eibl, Franz
Wiesenweg 48
A-6094 Axams(AT)

(74) Vertreter: Kmentt, Wolfgang, Dipl.-Ing.
Schubertgasse 53
A-2380 Perchtoldsdorf(AT)

(54) Vorrichtung zur Beseitigung von Kesselstein bzw. zum Verhüten der Bildung von Kesselstein u. dgl.

(57) Bei einer Vorrichtung zur Beseitigung von Kesselstein bzw. zum Verhüten der Bildung von Kesselstein u.dgl., bei der die zu behandelnde Flüssigkeit durch den Innenraum eines mit einem periodisch veränderlichen Strom gespeisten Solenoides vorzugsweise teilweise in entgegengesetzten Richtungen hindurchgeführt wird, wird vorgeschlagen, einen in sich geschlossenen rohrförmigen Ring (1-4) mit einer Eintrittsstelle und einer dieser etwa gegenüberliegenden Austrittsstelle für die Flüssigkeit vorzusehen, wobei im rohrförmigen Ring im Bereich der Eintrittsstelle und der Austrittsstelle je ein konzentrisch angeordnetes, an einem seiner Enden in den Ring abgedichtet eingesetztes Innenrohr (6) vorgesehen ist. Hiebei umschließt neben der Eintrittsstelle und der Austrittsstelle je ein Solenoid (7) den Ring samt Innenrohr.

Fig 1

EP 0 091 896 A1

- 1 -

## Vorrichtung zur Beseitigung von Kesselstein bzw. zum Verhüten der Bildung von Kesselstein u. dgl..

Elektrische Vorrichtungen zum Verhüten bzw. Beseitigen von Kesselsteinansatz sind in mehreren Ausführungsformen bereits vorgeschlagen worden, wobei grundsätzlich von der Einwirkung eines elektrischen Kraftfeldes auf die zu behandelnde Flüssigkeit Gebrauch gemacht wird. Um die Wirkung derartiger Vorrichtungen zu verstärken, hat man auch schon daran gedacht, die Flüssigkeit, also z.B. das zu behandelnde Wasser, mehrmals in wechselnder Richtung durch das Magnetfeld zu führen, wobei bisher eine genaue Theorie der Zusammenhänge trotz der erreichten Effekte noch nicht aufgestellt werden konnte. Im allgemeinen dienen alle diese bekannten Vorrichtungen der Verhinderung, z.B. der Ausfällung von in der zu behandelnden Flüssigkeit gelösten Substanzen sowie zur Vermeidung von Korrosionen, welche beim Durchfließen von Leitungen, Armaturen und auch von Geräten, wie Wasserboiler, Wärmeaustauscher u.dgl., entstehen, insbesondere dann, wenn sich das Wasser als stark kalkhaltig erweist.

Es versteht sich ferner, daß immer auch eine möglichst einfache und kompakte Bauart angestrebt wurde, die ohne Schwierigkeiten in Wassernetze auch nachträglich eingebaut werden kann.

Es wurde nun gemäß der Erfindung gefunden, daß ein besonderer Effekt dann erzielt werden kann, wenn man die zu behandelnde Flüssigkeit nicht nur durch den Innenraum eines ein magnetisches Kraftfeld erzeugenden Solenoids hindurchführt, sondern zugleich auch für eine entsprechende Turbulenz beim Durchströmen Sorge trägt, indem man die Flüssigkeit, z.B. Wasser, durch vorzugsweise zweimaliges Umlenken um scharfe Kanten durch das magnetische Kraftfeld führt, und damit den strömungsphysikalischen Effekt, hervorgerufen durch das Umströmen scharfer Kanten, mit dem an sich bekannten Effekt der Einwirkung eines Magnetfeldes auf die Flüssigkeit zu einer bisher nicht erreichten Wirkung vereint.

Ausgehend von einer Vorrichtung zur Beseitigung von Kesselstein bzw. zum Verhüten der Bildung von Kesselstein u. dgl., bei der die zu behandelnde Flüssigkeit durch den Innenraum eines mit einem periodisch veränderlichen Strom gespeisten Solenoides vorzugsweise in entgegengesetzten Richtungen hindurchgeführt wird, wird gemäß der Erfindung ein in sich geschlossener rohrförmiger Ring mit einer Eintrittsstelle und einer dieser etwa gegenüberliegenden Austrittsstelle für die Flüssigkeit vorgeschlagen, wobei im rohrförmigen Ring im Bereich der Eintrittsstelle und der Austrittsstelle je ein konzentrisch angeordnetes, an einem seiner Enden in den Ring abgedichtet eingesetztes Innenrohr vorgesehen ist. Hiebei umschließt neben der Eintrittsstelle und neben der Austrittsstelle je ein Solenoid den Ring samt Innenrohr.

Das den rohrförmigen Ring, der eine Art Magnetjoch bildet, durchsetzende Wasser umströmt die scharfen Kanten eines ersten Innenrohres, indem es, nach dem Eintritt in den Ring und nach Durchströmen des ersten Solenoids zum Teil in dieses konzentrisch zum Solenoid und Ring angeordnete erste Innenrohr gelangt und sodann, jetzt aber in entgegengesetzter Richtung, das Magnetfeld ein zweites Mal durchsetzt; das im Ring weiterströmende Wasser gelangt in das zweite Innenrohr und durchsetzt das Kraftfeld eines zweiten Solenoids, um nach Umströmen der scharfen Kante dieses zweiten Innenrohres zusammen mit der vom ersten Innenrohr ankommenden Flüssigkeit das zweite Solenoid abermals und in turbulentem Zustand zu durchströmen, worauf es aus dem Ring austritt.

Mit Vorteil besteht der rohrförmige Ring der erfindungsgemäßen Vorrichtung aus handelsüblichen Fittingen, wie Viertelbögen, T-Stücken u. dgl., die zu einem etwa rechteckig verlaufenden Ring zusammengefügt sind, wobei die beiden Innenrohre in den längeren Schenkeln des Rechtecks eingesetzt sind.

Um eine wirtschaftlich günstige Fertigung zu ermöglichen, kann beim erfindungsgemäßen Gerät der rohrförmige Ring aus gleich ausgebildeten, jedoch antisymmetrisch zusammengefügten Teilen bestehen. Hiebei erwies es sich als vorteilhaft, daß die Innenrohre mittels eines aus antimagnetischem Material bestehenden Zwischenstückes eingefügt sind und sich zu beiden Seiten der Eintritts- und Austrittsstelle etwa gleich weit erstrecken.

Nachstehend soll ein Ausführungsbeispiel anhand der Zeichnung näher erläutert werden, wobei

       Fig. 1 das erfindungsgemäße Gerät im Schnitt
       darstellt. Fig. 2 zeigt schematisch die Führung
       des das Gerät durchsetzenden Wasserstromes. In
       Fig. 3 ist ein Schaltschema dargestellt.

Das erfindungsgemäße Gerät ist im Prinzip ein aus handelsüblichen Fittingen zusammengesetzter, in sich geschlossener rohrförmiger Ring 1.

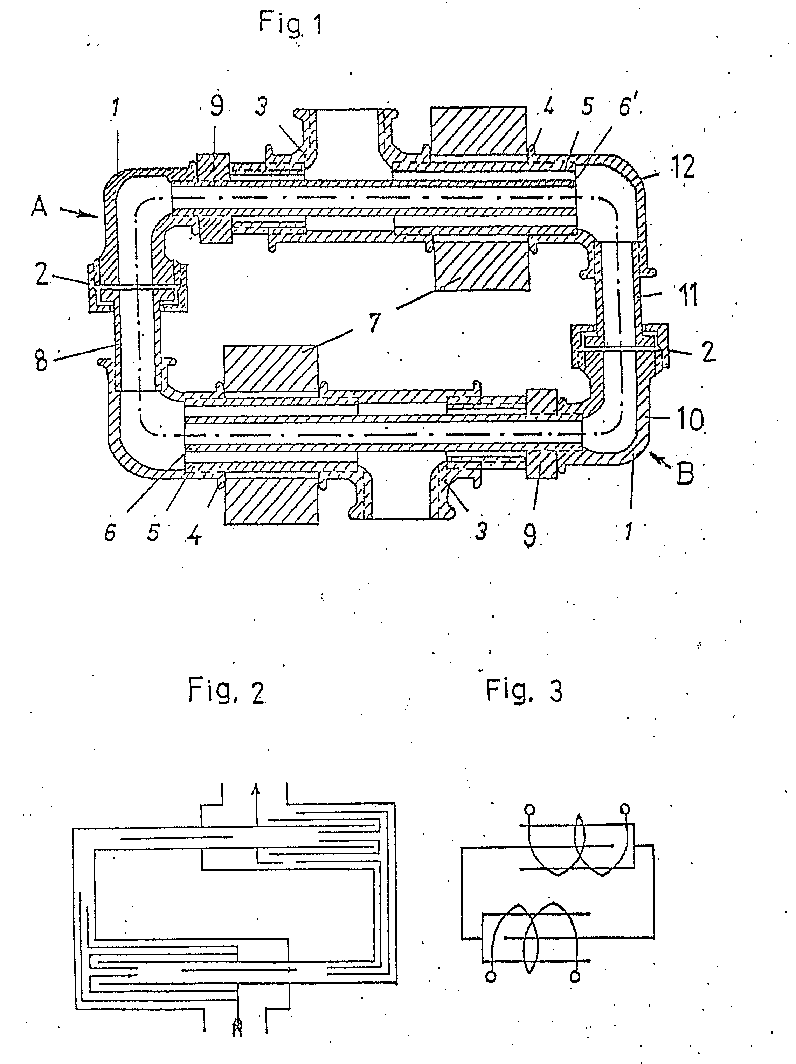

Wie Fig. 1 zeigt, sind zwei gleich ausgebildete Teile A und B mittels einer Überwurfmutter 2 antisymmetrisch zusammengefügt. Der Eintritt des das Gerät durchsetzenden Wasserstromes kann an einem T-Stück 3 erfolgen. Der Wasserstrom gelangt dann an der Außenwandung eines ersten Innenrohres 6 durch den Innenraum eines Solenoids 7 zu einem Viertel-Bogen 4. Hier teilt sich der Wasserstrom, u.zw. strömt ein Teil durch einen Nippel 8, in der Zeichnung gesehen, nach oben, während ein anderer Teil um die scharfe Eintrittskante des ersten Innenrohres 6 in dieses eintritt und damit nochmals den Innenraum des Solenoids durchsetzt. Infolge der vorhandenen Kanten an dem Ver-

- 4 -

bindungsnippel 5, der das Solenoid 7 trägt, und der Kante am Innenrohr 6 kommt es in diesem Bereich zu einer erheblichen Turbulenz der strömenden Flüssigkeit, die gleichzeitig dem vom Solenoid 7 bewirkten Magnetfeld ausgesetzt ist. Wie der Zeichnung zu entnehmen ist, ist das erste Innenrohr 6 an seinem anderen Ende mittels eines Zwischenstückes 9 aus antimagnetischen Werkstoff in den rohrförmigen Ring1 eingesetzt und in einem Viertel-Bogen 10 eingeschraubt.Demnach kann das eintretende Wasser an der Außenfläche des Innenrohres 6 des rohrförmigen Ringes nur (in der Zeichnung) nach links strömen und sich, wie bereits geschildert, in zwei Teilströme teilen.

Da das Gerät, wie bereits erwähnt, aus zwei gleichen Teilen A,B zusammengeschraubt ist, vollziehen sich im zweiten Teil strömungsmäßig die gleichen Vorgänge, nur daß die von links kommende Teilflüssigkeit das zweite Innenrohr 6' durchsetzt und dabei dem Magnetfeld des oberen Solenoids 7 ausgesetzt wird. Dieser Teilstrom vereinigt sich am freien Ende des zweiten Innenrohres 6' mit dem hier ankommenden Teilstrom, der das erste Innenrohr 6 durchströmt hat und über den Viertel-Bogen 10 und einem Nippel 11 zu einem Viertel-Bogen 12 gelangt ist. Bei der Vereinigung kommt es schon infolge der entgegengesetzten Richtungen der beiden Teilströme zu einer heftigen Turbulenz und die Flüssigkeit gelangt nunmehr an der Außenfläche des zweiten Innenrohres 6' durch das Magnetfeld des zweiten Solenoids 7 zum Austritt aus der Vorrichtung, die wie der Eintritt aus einem T-förmigen Fitting 3 besteht.

Beispiel 1:

Um die Verhütung von Kalkablagerungen durch das erfindungsgemäße Gerät zu überprüfen, wurde einem Wasserdestillationsgerät (Fontavapor 205) 48 Stunden lang ein erfindungsgemäßes Gerät vorgeschaltet und die gleiche Zeit ohne erfindungsgemäßes Gerät betrieben. Hiebei war die Härte des verwendeten Wassers 18 % dH. Anschließend wurden die an den Elektroden abgelagerten Kalkmengen gravimetrisch bestimmt. Es ergab sich, daß die Kalkablagerungen beim Betrieb mit vorgeschaltetem erfindungsgemäßen Gerät um 40 % reduziert wurden.

Beispiel 2:

Um die Verhinderung einer Korrosion an Eisen zu prüfen, wurden bei einer Versuchsanordnung gemäß Beispiel 1 zusätzlich Prüfkörper (gemäß EMPA-Korrosionsprüfung) aus Gußeisen eingesetzt. Die an den Prüfkörpern entstandenen Korrosionspunkte wurden mit einer geeigneten Beizlösung entfernt und die Gewichtsverluste ermittelt. Es ergab sich, daß das erfindungsgemäße Gerät die Korrosionsverluste bei Eisen um 65 % reduziert.

Es ist zu erkennen, daß die das Gerät durchsetzende Flüssigkeit an zwei Stellen einer heftigen Turbulenz und gleichzeitig der Einwirkung eines Magnetfeldes unterworfen wird, woraus die bereits durch Versuche bestätigte Wirkung resultiert.

In Fig. 2 ist der vorstehend geschilderte Strömungsweg des die erfindungsgemäße Vorrichtung durchsetzenden Wasserstromes durch Pfeile verdeutlicht dargestellt.

Fig. 3 zeigt die Anschlüsse der beiden Solenoide 7.

**0091896**

Patentansprüche:

1. Vorrichtung zur Beseitigung von Kesselstein bzw. zum Verhüten der Bildung von Kesselstein u.dgl., bei der die zu behandelnde Flüssigkeit durch den Innenraum eines mit einem periodisch veränderlichen Strom gespeisten Solenoides vorzugsweise teilweise in entgegengesetzten Richtungen hindurchgeführt wird, gekennzeichnet durch einen in sich geschlossenen rohrförmigen Ring (1-4) mit einer Eintrittsstelle und einer dieser etwa gegenüberliegenden Austrittsstelle für die Flüssigkeit, wobei im rohrförmigen Ring im Bereich der Eintrittsstelle und der Austrittsstelle je ein konzentrisch angeordnetes, an einem seiner Enden in den Ring abgedichtet eingesetztes Innenrohr (6) vorgesehen ist, und daß neben der Eintrittsstelle und der Austrittsstelle je ein Solenoid (7) den Ring samt Innenrohr umschließt.

2. Vorrichtung nach Anspruch 1, dadurch gekennzeichnet, daß der rohrförmige Ring aus handelsüblichen Fittingen, wie Viertelbögen, T-Stücken (3) u.dgl., besteht, die zu einem etwa rechteckig verlaufenden Ring (1) zusammengefügt sind, wobei die beiden Innenrohre (6) in den längeren Schenkeln des Rechtecks eingesetzt sind.

3. Vorrichtung nach Anspruch 2, dadurch gekennzeichnet, daß der rohrförmige Ring (1-4) aus gleich ausgebildeten, antisymmetrisch zusammengefügten Teilen (A,B) besteht.

4. Vorrichtung nach einem der Ansprüche 1 bis 3, dadurch gekennzeichnet, daß die Innenrohre (6) mittels eines aus antimagnetischem Material bestehenden Zwischenstückes (2) eingefügt sind, und sich zu beiden Seiten der Eintritts- und Austrittsstelle etwa gleich weit erstrecken.

Fig. 1

0091896

Fig. 2

Fig. 3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-2 596 743   (T.I.S. VERMEIREN) * Insgesamt * | 1-4 | C 02 F    1/48 |
| A | US-A-4 146 479   (M.J. BROWN) * Figuren 1,2,9 * | 1 | |
| A | US-A-2 939 830   (W.G. GREEN et al.) * Figuren 1,4,8 * | 1 | |
| A | US-A-4 288 323   (M.F. BRIGANTE) * Insgesamt * | 1 | |

| RECHERCHIERTE SACHGEBIETE (Int. Cl. ³) |
|---|
| C 02 F |

Der vorliegende Recherchenbericht wurde für alle Patentansprüche erstellt.

| Recherchenort DEN HAAG | Abschlußdatum der Recherche 21-07-1983 | Prüfer VAN AKOLEYEN H.T.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82